# EUROPEAN PATENT APPLICATION

(11) **EP 4 413 851 A1**
(43) Date of publication of application: **14.08.2024**
(21) Application number: 23164582.1
(22) Date of filing: 28.03.2023
(51) Int. Cl.: A01G 25/00, A01G 25/02

(54) **FLOW REGULATING DEVICE AND METHOD OF IRRIGATING AN AREA**

(30) Priority: 13.02.2023 IN 202321009477
(71) Applicant: Cenergist Limited, Washinton NE37 2SH (GB)
(72) Inventor: Sankar, Sandip, 711103 Howrah (IN)
(74) Representative: Arnold & Siedsma

(57) **Abstract**

Flow regulating device (1) for regulating a flow of fluid therethrough, comprising an inlet (11) arranged to be coupled to a fluid supply (21), a pressure chamber (12) connected via a fluid inlet channel to the inlet (11) for accumulating fluid from the inlet (11), an outlet (14) for the fluid to flow out of the flow regulating device (1), and a fluid outlet channel extending between the chamber (12) and the outlet (14), wherein the fluid outlet channel and the fluid inlet channel have cross-sectional areas smaller than a cross-sectional flow area of the pressure chamber (12) for forming a pressure release means arranged to allow a fluid flow from the chamber (12) through the outlet channel to the outlet (14) when a pressure difference between the pressure chamber (12) and the outlet channel exceeds a predetermined nonzero threshold, and wherein the pressure release means is arranged to limit said fluid flow when the pressure difference is below the threshold.

## Description

The present invention relates to a flow regulating device for regulating a flow of fluid therethrough and an irrigation system for and a method of irrigating an area.

Water is a scarce resource in many regions of the world and thus needs to be efficiently used and its supply needs to be carefully regulated and controlled. In particular, there is a need in the agricultural sector for flow regulators, for instance in irrigation installations.

Irrigation is the practice of applying controlled amounts of water to land, for example an agricultural field. In sprinkler irrigation, water is piped to one or more central locations within the field and distributed by overhead high-pressure water devices. In drip irrigation, a type of microirrigation, water is distributed under low pressure through a piped network and is discharged in a slowly dripping manner. Conventional drippers for horticultural and agricultural applications are mainly based on aperture-based flow, wherein a drop-wise discharge flow is obtained due to the pre-set aperture at the dripper outlet. That is, the release of water is based on the outlet geometry, such as diameter and passage length. Discharge flow rates then vary based on the in-field pressure conditions. The conventional drippers are mounted to a main pipe network for agricultural irrigation. However, when the pressure varies, the situation may arise that the drippers fail to maintain a sufficiently constant discharge flow rate as pressure changes alter the flow rate such that the dripper discharge rate also varies.

More in general, in case a constant flow rate is not maintained in an irrigation system, water loss and consequently energy loss may occur, which reduces the overall performance of the irrigation system.

It is therefore an object of the present invention, amongst other objects, to provide an improved flow regulating device, in particular to improve the performance of irrigation systems.

Hereto, a flow regulating device for regulating a flow of fluid therethrough according to claim 1 is provided, comprising an inlet arranged to be coupled to a fluid supply, a pressure chamber connected via a fluid inlet channel to the inlet for accumulating fluid from the inlet, an outlet for the fluid to flow out of the flow regulating device, and a fluid outlet channel extending between the chamber and the outlet, wherein the fluid outlet channel and the fluid inlet channel have cross-sectional areas smaller than a cross-sectional flow area of the pressure chamber for forming a pressure release means arranged to allow a fluid flow from the chamber through the outlet channel to the outlet when a pressure difference between the pressure chamber and the outlet channel exceeds a predetermined nonzero threshold, and wherein the pressure release means is arranged to limit said fluid flow when the pressure difference is below the threshold.

It was found that, although existing flow regulating devices can output a substantially constant flow rate under higher pressures, their operation can be improved in lower pressure ranges. As such, by providing the pressure chamber in combination with the pressure release means, it can be ensured that either there is no flow through the outlet, or the fluid flows through the outlet at an accurate rate. This way, at moments of low pressure when fluid is not supposed to be discharged, the discharge of fluid under the influence of that pressure, albeit at low flow rates, can be prevented such that water loss in irrigation systems can be reduced.

The flow regulating device can be coupled to the water supply of an irrigation system, such that the water from the supply can be applied to a designated area either directly through the outlet or via a distinct water discharge device, such as a sprinkler, that is coupled to the outlet of the flow regulating device.

For instance, the flow regulating device may be coupled to a sprinkler inlet to enable a substantially pressure-independent flow rate through the sprinkler, as follows. The pressure chamber accumulates the fluid from the inlet that enters the chamber, which may be designed to accumulate the fluid until a predetermined chamber pressure or fluid amount is reached. Once the threshold is exceeded, the pressure release means releases the fluid, that was accumulated in the pressure chamber, through the fluid outlet channel.

According to an embodiment of the flow regulating device, the fluid outlet channel and/or the fluid inlet channel has a diameter in the range of 0.1 to 10 millimetres, preferably 0.5 to 2 millimetres. Particularly towards the outlet, the respective channel preferably has a substantially constant diameter. Through a fluid outlet channel with a diameter of, e.g., 1 millimetre, water can be released in a dripping manner for a particular operating pressure range of, e.g., 1 to 2 bar due to friction inside the channel. It was found that the pressure of the main water supply line for horticultural or agricultural irrigation applications generally falls within the range of 1 to 2 bar. Thus, the flow regulating device can ensure pressure-independent flow rates based on a predetermined range of main pipe pressures.

Such a flow regulating device can be used as an irrigation device, specifically of the type referred to as drip irrigation emitters or drippers. In such drippers, the flow of water is regulated or limited due to friction by releasing the water through a narrow, elongated channel as opposed to a small hole. The pressure chamber in combination with the pressure release means can improve the fluid flow regulation in such a drip irrigation device.

The pressure chamber may be discoid, with a preferred diameter of between 5 and 10 times the diameter of the inlet and/or outlet channel. The chamber diameter may be in the range of 5 to 10 millimetres, preferably 6 to 8 millimetres, more preferably approximately 6.8 millimetres. The centre axis of the disc-shaped chamber is preferably parallel to the inlet channel. The length or width of the chamber, more specifically the dimension in the direction of the centre axis, may be approximately equal to the diameter of the inlet and/or outlet channel. Preferably, the chamber width is in the range of 0.1 to 10 millimetres, more preferably 0.5 to 2 millimetres, even more preferably 1 millimetre. In general, it is preferred if the diameter of the chamber exceeds its length or width.

It is preferred if, rather than directly flowing from the inlet channel to the outlet channel, the fluid is recirculated in the pressure chamber. Hereto, the fluid inlet channel and the fluid outlet channel are arranged offset. More specifically, the fluid inlet channel is arranged for fluid to flow into the pressure chamber along an inflow axis, wherein the fluid outlet channel is arranged radially offset relative to the inflow axis. The inflow axis is preferably parallel to or collinear with a central axis of the flow regulating device and/or the centre axis of the discoid pressure chamber. Upon entering the pressure chamber, the fluid does not immediately encounter the outlet channel but instead flows against a wall of the chamber such that recirculation of the fluid and therefore accumulation of the fluid in the chamber is enhanced, while still allowing the fluid to flow out of the chamber and into the offset outlet channel when the threshold pressure is reached.

According to a further embodiment of the flow regulating device, the pressure chamber is a first pressure chamber and the device further comprises a second pressure chamber, wherein the first chamber is connected to the second chamber via the fluid outlet channel, wherein the outlet is coupled to the second chamber via a second fluid outlet channel. By adding an additional pressure chamber, an additional pressure drop inside the dripper can be enabled, which enhances the pressure-independence of the flow-regulating device. Preferably, the first and second fluid outlets are arranged radially offset. This way, recirculation of the fluid and therefore accumulation of the fluid in the second chamber can be enhanced, as described above in relation to the first chamber. The second outlet channel may thus be collinear with the inlet channel. It is possible to provide further pressure chambers in a similar manner, such that the flow regulating device comprises at least three or four pressure chambers in an arrangement in which the pressure chambers are interconnected by respective fluid outlet channels that are preferably arranged mutually offset as described above. In general, the two or more pressure chambers may be correspondingly shaped.

According to a further embodiment of the flow regulating device, the device comprises a front assembly part including the inlet and the fluid inlet channel, a centre assembly part including the pressure chamber, and a rear assembly part including the fluid outlet channel and the outlet. The assembly parts comprise mutually cooperating coupling means. This way, the flow regulating device can be conveniently assembled and disassembled. Moreover, as the centre part includes the one or more pressure chambers and optionally one or more fluid channels and, in other words, is the component that influences the pressure drop provided inside the device, the properties of the flow regulating device can be conveniently adjusted by replacing the centre part in the assembly in dependence of the intended flow characteristics. Preferably, the centre assembly part is secured between and by the front assembly part and the rear assembly part, for example by means of a push-fit connection.

The first chamber may be formed between the front assembly part and the centre assembly part. Additionally, or alternatively, the second chamber may be formed between the centre assembly part and the rear assembly part. This way, the chambers can be formed efficiently, and a compact assembly can be obtained.

According to an alternative embodiment of the flow regulating device, the flow regulating device comprises a flow regulating element arranged in the fluid outlet channel to regulate a flow rate of the fluid flowing through the outlet, wherein the flow regulating element defines a throughflow opening and is arranged to adjust the size of the throughflow opening in dependence of a pressure of the fluid flowing through the flow regulating element to regulate the flow rate of the fluid flowing through the outlet. Typically, such a flow regulating element has an optimal working range in terms of inlet pressures. The pressure release means is then preferably arranged to allow the fluid flow from the pressure chamber to the outlet when the pressure exceeds a threshold that is defined by said optimal working range.

As such, once a certain volume of fluid is accumulated in the pressure chamber and the fluid exits the chamber, the fluid flows through the flow regulating element which then regulates the flow rate of the fluid. Specifically, the flow regulating element operates according to its inlet pressure and can provide a predetermined flow rate for a specific inlet pressure range. The pressure chamber ensures a minimum regulator inlet pressure for the flow regulating element to operate in its optimal pressure range. The flow regulating element can then ensure a pressure-independent flow rate such that, when the device is coupled to for example a sprinkler, the pressure corresponds to the sprinkler inlet pressure at which the sprinkler operates optimally. As such, the sprinkler performance can be enhanced.

Hereto, the flow regulating element preferably comprises a valve seat and a resilient plate-like valve element defining the throughflow opening therebetween, wherein the valve element is arranged movable to and from the valve seat under the influence of the pressure of the fluid flowing through the flow regulating element to adjust the size of the throughflow opening.

The flow regulating element, or simply flow regulator, operates by restricting the throughflow opening between the resilient plate-like valve element and the valve seat when the pressure increases. Such an increased pressure will act on the upstream side of the resilient plate-like valve element whereby it will bend, such that the resilient plate-like valve element moves towards the valve seat, whereby the throughflow opening is reduced and the flow is limited, or at least kept substantially constant with increasing pressure. Such a flow regulating element is described in European patent No. 1 131 687 and Dutch patent application No. 1010592, the contents of which are hereby incorporated by reference.

The flow regulating element is preferably arranged to regulate the fluid flowing through the outlet to flow at a predefined flow rate, preferably in the range of 0.1 to 1, preferably 0.2 to 0.5, litres per second.

According to another aspect, an irrigation system for irrigating an area is provided, which comprises a flow regulating device according to any of the above embodiments. Such a system is then capable of providing a substantially constant flow rate, irrespective of the inlet pressures. In particular in irrigation systems, great water savings can be achieved. Preferably, the irrigation system further comprises a sprinkler device comprising a sprinkler inlet, coupled to the outlet of the flow regulating device, and a sprinkler head arranged to distribute the fluid over the area. Specifically, the sprinkler head may comprise a sprinkler outlet for spraying the fluid over the area. To achieve the desired pressure and flow rate through the sprinkler, it is preferred if the sprinkler outlet is located above the sprinkler inlet, preferably at least 0.5 metre, more preferably between 1 and 1.5 metres, above the sprinkler inlet.

Alternatively, the irrigation system may be a drip irrigation system comprising a plurality of dripping emitters for applying fluid to the area, particularly in a dripping manner. Each dripping emitter comprises a flow regulating device as described above.

According to yet another aspect, a method of irrigating an area is provided, which comprises irrigating the area using a flow regulating device according to any of the above embodiments. Preferably, the method comprises the steps of:
- providing a flow regulating device according to any of the above embodiments, wherein the inlet of the flow regulating device is coupled to a fluid supply;
- generating a flow of fluid from the fluid supply into the inlet;
- accumulating the fluid in the pressure chamber;
- limiting a fluid flow from the pressure chamber through the fluid outlet channel to the outlet when the pressure difference between the pressure chamber and the fluid outlet channel is below the predetermined threshold;
- allowing said fluid flow when the pressure difference exceeds the threshold.

Then, the fluid may be applied to the area via the outlet, either directly from the outlet or via, e.g., a sprinkler device coupled to the outlet. The step of providing the flow regulating device may comprise providing an irrigation system as described above, which comprises the flow regulating device. Particularly in a drip irrigation system, the fluid from the outlet is directly applied to the area.

The pressure of the fluid flow may be in the range of 1 to 4 bar, for instance 1.2 to 3.5 bar. This is particularly advantageous in sprinkler irrigation.

The method may further comprise at least one of the steps of assembling the flow regulating device, coupling the flow regulating device to the fluid supply and/or a sprinkler device, and varying the pressure in the fluid supply.

Specifically, the pressure in the fluid supply may be varied, for instance between 1 and 2 bar. The pressure may be varied actively, i.e. controlled, or passively due to natural causes.

The present invention is further elucidated with reference to the attached drawings, which show preferred embodiments of the flow regulating device and are not intended to limit the scope of the invention in any way, wherein:
- Figure 1 schematically represents a first embodiment of the flow regulating device;
- Figure 2 schematically represents a sprinkler system comprising the first embodiment;
- Figure 3 shows a flow regulating element of the first embodiment in cross-section;
- Figure 4A shows a second embodiment of the flow regulating device in exploded view, and;
- Figure 4B shows the second embodiment of the flow regulating device in cross-section.

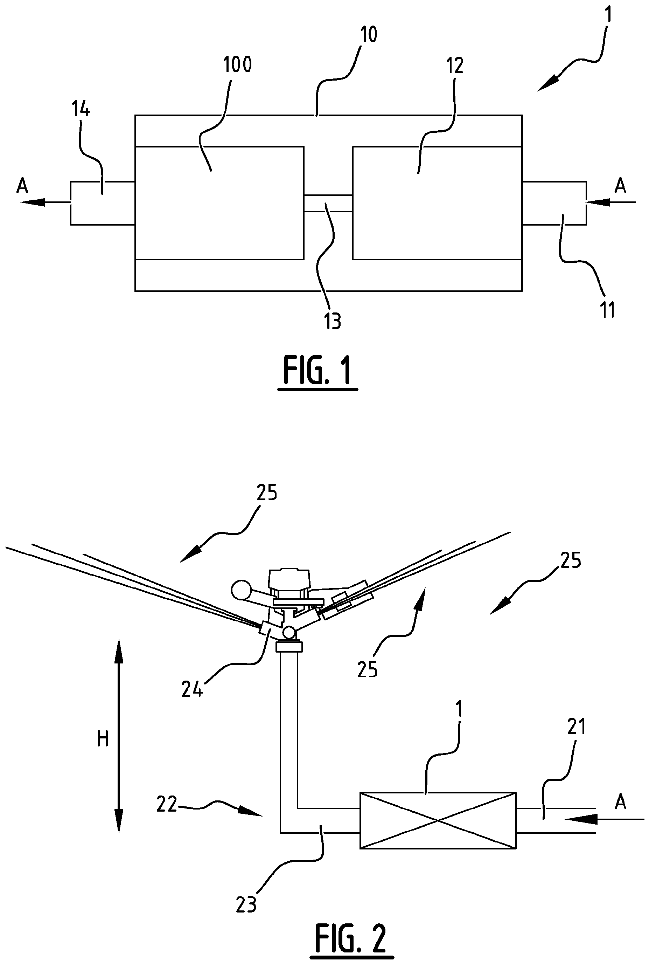

Figure 1 schematically represents a pressure-independent flow control assembly 1 comprising a housing 10, provided with an inlet 11, a pressure chamber 12, a connector 13, a flow regulator 100 connected to the pressure chamber 12 by the connector 13, and an outlet 14. Fluid can flow in the direction indicated by arrows A. The fluid can be a liquid such as water.

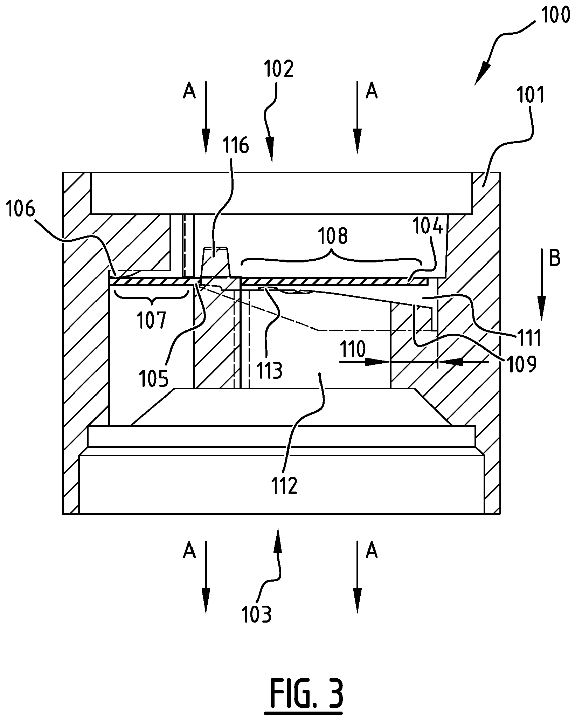

The flow regulator 100 is illustrated in more detail in Figure 3, which represents a cross-sectional view of the flow regulator 100. The flow regulator 100 comprises a regulator housing 101 which has, as a regulator inlet 102, a fluid opening on the upstream side and, as a regulator outlet 103, a fluid opening on the downstream side. The direction of flow is indicated by the different arrows A and is in the direction as seen from the inlet 102 to the outlet 103. Within the housing 101, a resilient plate-like valve element 104 is arranged, comprising a retained section 107 and a resiliently movable section 108. The plate-like resilient valve element 104 is supported on a support part 105 in the central downstream part of housing 101, wherein said support part 105 and a cushion part 106 in the peripheral upstream part of housing 101 hold in place the retained section 107 of resilient plate-like valve element 104. This fixation is brought about as follows. The resilient valve element 104 in principle lies unattached in housing 101 and is supported on one side over the whole width by support part 105 and held in place by a pin 116 on support part 105 which fits loosely in a hole arranged in resilient element 104. Both sides, i.e. the smaller retained section 107 and the larger resilient section 108 of the resilient element are exposed to the water pressure and a force is therefore exerted on both sides. The outer end of retained section 117 on the opposite side of resilient valve element 104 rests against cushion 106, whereby the resilient valve element 104 is fixed in its position by the flow of the liquid. The size of the throughflow opening 111 can be adjusted in the rest state of valve element 104 by adjusting the thickness of cushion 106. The resilient section 108 of plate-like valve element 4 determines, together with a valve seat 109 with thickness 110 inclining downward to the outer end of resilient part 8, the width and length of the throughflow opening 111, wherein said opening 111, together with the space 112 lying on the liquid outlet side of resilient element 104, realises a pressure drop such that the liquid flow rate at the outlet 103 is constant. The flow regulator 100 is arranged to regulate the fluid flowing through the outlet 103 to flow at a predefined flow rate of 0.3 litres per second.

Referring again to Figure 1, the pressure chamber 12 accumulates water entering from the inlet 11. When a predetermined pressure limit is achieved, the connector 13 which connects the chamber 12 to the flow regulator 100 allows the water in the chamber 12 to flow to the flow regulator 100. The water flow stops when the pressure is below the threshold. Although, to control the flow, the connector 13 may be a pressure relief valve, the connector 13 in this example is instead arranged such that the pressure chamber 12 accumulates a certain amount of fluid which exits the pressure chamber 12 at a predetermined flow rate.

Figure 2 schematically represents a sprinkler system 20 comprising the pressure-independent flow control assembly 1 with its inlet 11 coupled to the main line 21 of a pipe network (not shown) by means of a threaded coupling mechanism. At the base 22 of the sprinkler, the sprinkler inlet 23 is coupled to the outlet 14 of the flow control assembly 1, also by means of a threaded coupling mechanism. A sprinkler head 24 for distributing water over an area by spraying water jets 25 is located at a height H between 1 and 1.5 metres above the sprinkler inlet 23. By mounting the flow control assembly 1 at the base 22 of the sprinkler, a pressure range of between 1 to 4 bar, for instance 1.2 to 3.5 bar, can be enabled, with a preferred flow rate of about 0.3 litres per second.

Upon reaching the required pressure in the pressure chamber 12 accumulating water from the network, the water flows from the chamber 12 through the connector 13, in order to ensure a desired minimum pressure for the flow regulator 100, and through the flow regulator 100 which provides a desired flow rate that is substantially constant and pressure-independent for optimal operation of the sprinkler 20.

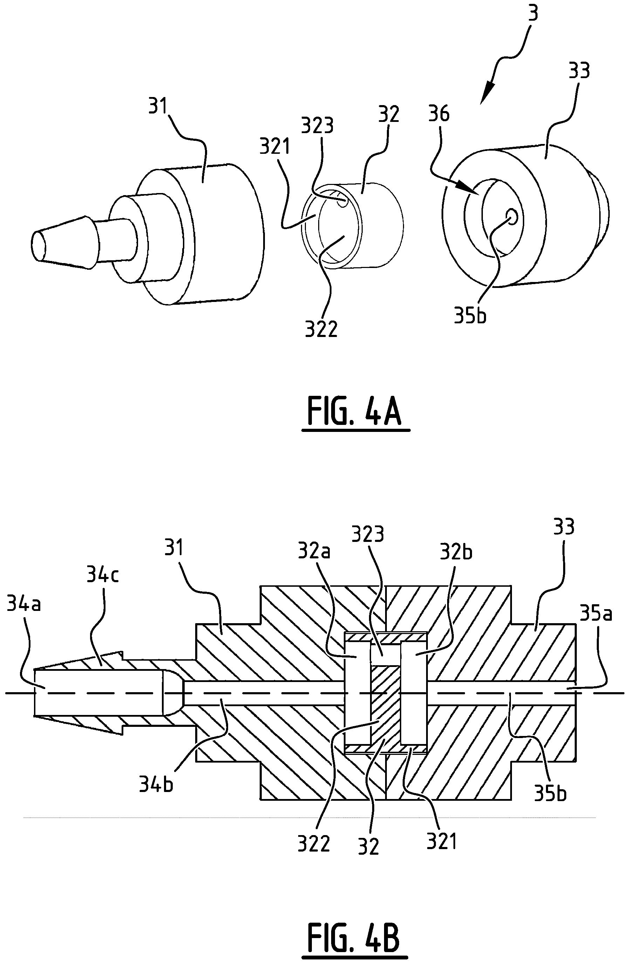

Figures 4A-B relate to a flow regulating device in the form of a pressure-independent dripper assembly 3 for providing a substantially pressure-independent flow rate of about 4 litres per hour, within the operating inlet pressure range of 1 to 2 bar.

The dripper 3 comprises three parts, including a head part 31, a centre disc part 32 and a tail part 33. The parts, shown disassembled in Figure 4A, can be mutually push-fitted for assembling the dripper 3 as shown in Figure 4B. Hereto, the parts 31, 32, 33 are made of an at least slightly elastic material, such as plastic, to enable the push-fit assembly.

Specifically, the head part 31 and the tail part 33 form an outer housing, wherein the inlet 34a together with the inlet channel 34b is formed in the head part 31 and the outlet 35a together with the outlet channel 35b is formed in the tail part 33. The centre part 32 comprises a tubular portion 321 and a disc portion 322 arranged inside the tubular portion 321 and perpendicular to its centre axis (indicated as a dashed line in Figure 4B). The disc portion 322 divides the inner space of the tubular portion 321 into an upstream chamber 32a and a downstream chamber 32b of the centre part 32. The chambers 32a, 32b are similarly discoid. The disc portion 322 is provided with a flow passage 323 interconnecting the two chambers 32a, 32b. The inlet channel 34b, the flow passage 323 and the outlet channel 35b each have a diameter of 1 millimetre. The inlet channel 34b and the outlet channel 35b are 9 millimetres in length, whereas the flow passage 323 therebetween is 3 millimetres in length. More in general, the first outlet channel 323 may be between 1 and 5 millimetres, and the inlet channel 34b and/or the second outlet channel 35b may be between 5 and 15 millimetres.

The discoid pressure chambers 32a, 32b have a diameter of about 7 times the diameter of the channels 34b, 323, 35b. The width of the chamber 32a, 32b equals the diameter of the channels 34b, 323, 35b. The centre axes of the disc-shaped chambers 32a, 32b and the channels 34b, 323, 35b are mutually parallel.

To assemble the dripper 3, the centre part 32 is push-fitted into a receptacle in the head part 31 that is shaped in correspondence with an outer diameter of the tubular portion 321 of the centre part 32. In addition, the other end of the centre part 32 is push-fitted into a receptacle 36 in the tail part 33 that is similarly shaped in correspondence with an outer diameter of the tubular portion 321 of the centre part 32. In the assembled state, the head part 31 and the tail part 33 are abutting each other. As such, the centre part 32 is secured between and enclosed by the head part 31 and the tail part 33. The upstream chamber 32a is formed between the head part 31 and the centre part 32, in particular its disc portion 322, and is connected to the inlet channel 34b, while the downstream chamber 32b is formed between the centre part 32, in particular its disc portion 322, and the tail part 33 and is connected to the outlet channel 35b.

The head part 31 can be fitted to the main pipeline of a water supply (not shown) and accommodates the inlet 34a into the dripper 3. Specifically, the inlet portion 34c of the dripper 3 protrudes and is tapered such that the outer diameter of the inlet portion 34c gradually decreases toward the free end thereof. This way, the inlet 34a can be conveniently coupled to the water supply by fitting the tapered inlet portion 34c into an outlet of the water supply, wherein the frustoconical inlet portion 34c functions as a stopper when the free end thereof is inserted into the water supply pipe.

The water from the main pipe enters the dripper 3 and flows through the inlet channel 34b towards the centre disc part 32 and into the upstream chamber 32a. As the water enters the upstream chamber 32a, it initially accumulates therein. The flow passage 323 interconnecting the upstream chamber 32a and the downstream chamber 32b is arranged at an offset relative to the inlet channel 34b, such that water is recirculated in the upstream chamber 32a instead of flowing directly from the inlet channel 34b through the flow passage 323.

Once the water reaches a certain pressure level, it flows through the offset flow passage 323 in the disc portion 322 and into the downstream chamber 32b. Similarly, the outlet channel 35b is arranged at an offset relative to the flow passage 323. During the hold-up in the chambers 32a, 32b, the water conforms to pressure-independence. When the threshold pressure level is reached, the water enters the outlet channel 35b provided in the tail part 33 for a drop-wise discharge of the water to the target area in a pressure-independent manner, which target area is for instance an agricultural field. The discharge flow rate is kept substantially constant due to the overall pressure drop inside the dripper 3. Specifically, the controlled flow rate at the outlet 35a is made pressure-independent by recirculating the water inside the dripper 3.

A series of experiments have been performed, wherein the inlet pressure has been varied from the initial condition of 1 bar to 2 bar at several increments and the resulting outlet flow rate has been measured at each pressure. The dripper 3 has been compared to a conventional dripper, with different geometrical configurations, for the same pressure ranges. The flow rate results for the present pressure-independent dripper 3 and the conventional dripper are presented in the following table:

| Run No. | Inlet pressure (bar) | Mean outlet flow rate (litres per hour) | |
|---|---|---|---|
| | | Present dripper | Other dripper |
| 1 | 1.0 | 4 | 13.80 |
| 2 | 1.1 | 4 | 14.52 |
| 3 | 1.2 | 4 | 15.18 |
| 4 | 1.3 | 4 | 15.70 |
| 5 | 1.4 | 4 | 16.38 |
| 6 | 1.5 | 4 | 16.98 |
| 7 | 1.6 | 4 | 17.52 |
| 8 | 1.7 | 4 | 18.06 |
| 9 | 1.8 | 4 | 18.60 |
| 10 | 1.9 | 4 | 19.08 |
| 11 | 2.0 | 4 | 20.00 |

For the pressure-independent dripper, the mean flow rate is 4 litres per hour with a standard deviation is 0.112, whereas the outlet flow rate of the other dripper increases with an increasing inlet pressure.

The experiments show that the dripper can provide a pressure-independent flow rate within a specified operating pressure range at the inlet. Although the tested pressure-independent dripper was designed to deliver a flow rate of 4 litres per hour for an inlet pressure of 1 to 2 bar, the design can be adapted to meet a different pressure-independent flow rate within the operating inlet pressure of, e.g., 1 to 2 bar. For instance, the channel diameters may be adjusted. More specifically, the channel diameters may be increased to increase the flow rate. Alternatively, or additionally, the dripper 3 may be disassembled and at least one component, preferably at least the centre disc part 32, is replaced by a centre disc part that differs in shape such that the chamber dimensions are adjusted to modify the holding capacity of the chamber, which has an effect on the flow rate.

The present invention is not limited to the embodiments shown, but extends also to other embodiments falling within the scope of the appended claims.

## Claims

1. Flow regulating device for regulating a flow of fluid therethrough, comprising an inlet arranged to be coupled to a fluid supply, a pressure chamber connected via a fluid inlet channel to the inlet for accumulating fluid from the inlet, an outlet for the fluid to flow out of the flow regulating device, and a fluid outlet channel extending between the chamber and the outlet, wherein the fluid outlet channel and the fluid inlet channel have cross-sectional areas smaller than a cross-sectional flow area of the pressure chamber for forming a pressure release means arranged to allow a fluid flow from the chamber through the outlet channel to the outlet when a pressure difference between the pressure chamber and the outlet channel exceeds a predetermined nonzero threshold, and wherein the pressure release means is arranged to limit said fluid flow when the pressure difference is below the threshold.

2. Flow regulating device according to claim 1, wherein the fluid outlet channel and/or the fluid inlet channel has a diameter in the range of 0.1 to 10 millimetres, preferably 0.5 to 2 millimetres.

3. Flow regulating device according to claim 1 or 2, wherein the fluid inlet channel is arranged for fluid to flow into the pressure chamber along an inflow axis, wherein the fluid outlet channel is arranged radially offset relative to the inflow axis.

4. Flow regulating device according to any of the preceding claims, wherein the pressure chamber is a first pressure chamber and the device further comprises a second pressure chamber, wherein the first chamber is connected to the second chamber via the fluid outlet channel, wherein the outlet is coupled to the second chamber via a second fluid outlet channel.

5. Flow regulating device according to claim 4, wherein the first and second fluid outlets are arranged radially offset.

6. Flow regulating device according to any of the preceding claims, comprising a front assembly part including the inlet and fluid inlet channel, a centre assembly part including the pressure chamber, and a rear assembly part including the fluid outlet channel and the outlet, wherein the assembly parts comprise mutually cooperating coupling means.

7. Flow regulating device according to claim 6, wherein the centre assembly part is secured between and by the front assembly part and the rear assembly part.

8. Flow regulating device according to at least claims 4 and 6, wherein the first and second chamber are formed respectively between the front assembly part and the centre assembly part and between the centre assembly part and the rear assembly part.

9. Flow regulating device according to any of the preceding claims, further comprising a flow regulating element arranged in the fluid outlet channel to regulate a flow rate of the fluid flowing through the outlet, wherein the flow regulating element defines a throughflow opening and is arranged to adjust the size of the throughflow opening in dependence of a pressure of the fluid flowing through the flow regulating element to regulate the flow rate of the fluid flowing through the outlet.

10. Flow regulating device according to claim 9, wherein the flow regulating element comprises a valve seat and a resilient plate-like valve element defining the throughflow opening therebetween, wherein the valve element is arranged movable to and from the valve seat under the influence of the pressure of the fluid flowing through the flow regulating element to adjust the size of the throughflow opening.

11. Flow regulating device according to at least claim 9 or 10, wherein the flow regulating element is arranged to regulate the fluid flowing through the outlet to flow at a predefined flow rate, preferably in the range of 0.1 to 1, preferably 0.2 to 0.5, litres per second.

12. Irrigation system for irrigating an area, comprising a flow regulating device according to any of the preceding claims and a sprinkler device comprising a sprinkler inlet, coupled to the outlet of the flow regulating device, and a sprinkler head arranged to distribute the fluid over the area.

13. Irrigation system according to claim 12, wherein the sprinkler head comprises a sprinkler outlet for spraying the fluid over the area, wherein the sprinkler outlet is located at least 0.5 metre, preferably between 1 and 1.5 metres, above the sprinkler inlet.

14. Drip irrigation system for irrigating an area, comprising a plurality of dripping emitters for applying fluid to the area, each dripping emitter comprising a flow regulating device according to any of the preceding claims 1 to 8.

15. Method of irrigating an area, comprising the steps of:
- providing a flow regulating device according to any of the preceding claims 1-11, wherein the inlet of the flow regulating device is coupled to a fluid supply;
- generating a flow of fluid from the fluid supply into the inlet;
- accumulating the fluid in the pressure chamber;
- limiting a fluid flow from the pressure chamber through the fluid outlet channel to the outlet when the pressure difference between the pressure chamber and the fluid outlet channel is below the predetermined threshold;
- allowing said fluid flow when the pressure difference exceeds the threshold.
